# EUROPÄISCHE PATENTANMELDUNG

(11) **EP 1 600 804 A1**
(43) Veröffentlichungstag der Anmeldung: **30.11.2005**
(21) Anmeldenummer: 05004308.2
(22) Anmeldetag: 28.02.2005
(51) Int. Cl.: G02B 23/24, A61B 1/00

(54) **Visuelle Einrichtung eines Endoskops**

(30) Priorität: 27.05.2004 DE 102004026004
(71) Anmelder: STM Medizintechnik Starnberg GmbH, 69469 Weinheim (DE)
(72) Erfinder: Pauker, Fritz, 86438 Kissing (DE); Viebach, Thomas, 82282 Pischertshofen (DE); Bob, Konstantin, Dr., 69469 Weinheim (DE)
(74) Vertreter: TBK-Patent

(57) **Zusammenfassung**

Die Erfindung betrifft eine visuelle Einrichtung eines Endoskops mit zumindest einer Optik (2) oder einem Optikverbund, welche(r) ein einem vorderen Bereich des Endoskops angeordnet ist. Die zumindest eine Optik oder der zumindest eine Optikverbund realisiert dabei einen Öffnungswinkel von größer als 180° und ist so angeordnet ist, dass dessen Blickfeld sowohl über die Senkrechte zur Bewegungsrichtung als auch über die nach vorn weisende Längsachse des Endoskops hinaus reicht.

## Beschreibung

Die vorliegende Erfindung betrifft eine visuelle Einrichtung eines Endoskops gemäß dem Oberbegriff des Patentanspruchs 1.

Grundsätzlich sind Endoskope auch in Form von Kapseln oder Sonden, letztere stellen im Prinzip ein Endoskop ohne Endoskopschaft dar, zur Exploration von Körperhöhlen wie Darm, Magen, Blutgefäße etc. mit visuellen bzw. optischen Einrichtung ausgestattet, die eine visuelle Inspektion oder auch die Bildaufnahme von Teilen der Körperhöhle erlauben, auf deren Basis Diagnosen von Krankheiten erstellt werden können.

Beispielsweise in der DE 101 16 056 A1 ist eine gattungsgemäße endoskopische Visualisierungsvorrichtung mit unterschiedlichen Bildsystemen bekannt. Konkret besitzt die bekannte Visualisierungsvorrichtung zwei Bildsysteme mit unterschiedlichem Blickwinkel und unterschiedlicher optischer Kenngröße (beispielsweise unterschiedliche Öffnungswinkel), deren nach vorn gerichtete Sichtfelder sich teilweise überschneiden und somit zwei unterschiedliche Perspektivedarstellungen eines zu untersuchenden Bereichs ermöglichen, ohne dass das Endoskop einem Positionswechsel unterzogen werden muss oder dass für unterschiedliche Aufnahmen ein Wechsel der Visualisierungseinrichtung erforderlich wird. Durch diese Maßnahme lässt sich eine stereoskopische Visualisierung erhalten, sodass einer Bedienerperson ein größeres Gesamt-Bildfeld zur Verfügung gestellt werden kann.

Grundsätzlich sind derartige Bildaufnahmen insbesondere im Bereich der Optik verfügbar und auch technisch nutzbar, seit entsprechende Rechnerkapazitäten und daran angepasste Rechenprogramme zur Verfügung stehen, die eine Rechner gestützte elektronische Bildbearbeitung ermöglichen, um aus einer Anzahl von bezüglich ihres Blickwinkels sich teilweise überlappenden Einzelaufnahmen ein Gesamt-Bild zu berechnen.

Insbesondere im Bereich der Endoskopie hat es sich gezeigt, dass beispielsweise bei der Exploration eines Darms die Fehlerquote bei der Auffindung von Polypen und Tumoren immer noch sehr hoch ist. Die Schwierigkeit besteht darin, dass das Sichtfeld eines eingeführten Endoskops im wesentlichen nach vorn gerichtet ist und auch sein muss, um die Einführbewegung visuell überwachen und steuern zu können. Polypen und Tumore, welche im Anfangsstadium noch sehr klein sind und welche sich ggf. an der Hinterseite einer Darmfalte befinden bleiben somit vielfach unentdeckt.

Der Erfindung liegt daher die Aufgabe zugrunde, ein Endoskop bzw. Sonde so weiterzubilden, dass eine verbesserte visuelle Exploration einer Körperhöhle ermöglicht wird.

Diese Aufgabe wird durch ein Endoskop bzw. eine Sonde mit den Merkmalen des anliegenden Patentanspruchs 1 gelöst.

Demzufolge besteht die Erfindung darin, die visuelle Einrichtung eines Endoskops mit zumindest einer Optik oder einem Optikverbund auszubilden, welche(r) einen Öffnungswinkel von größer als 180° (d.h. > 90° von der Längsachse aus gesehen) ermöglicht. Die Optik bzw. der Optikverbund ist so angeordnet ist, dass dessen Blickfeld sowohl über die Senkrechte zur Bewegungsrichtung bzw. zur Längsachse des Endoskops als auch vorzugsweise über die nach vorn weisende Längsachse (Bewegungsrichtung) des Endoskops hinaus reicht.

Der Vorteil einer besonderen Ausrichtung der zumindest einen Optik oder des zumindest einen Optikverbunds in einem Winkel zur Bewegungsrichtung des Endoskops ermöglicht bei entsprechend gewähltem Öffnungswinkel gemäß vorstehender Definition somit einen Rückblick bei gleichzeitiger Sicht nach vorn, sodass unter Beibehaltung optimaler visueller Steuerungskontrolle bei einer Vorwärtsbewegung des Endoskops gleichzeitig auch solche Stellen beispielsweise unmittelbar hinter Darmfalten, welche im toten Winkel einer ausschließlich nach Vorn und/oder ggf. zur Seite gerichteten Optik lägen, nunmehr erfasst und somit untersucht werden können.

Besonders wichtig ist es ferner, die Optik bzw. den Optikverbund unter Gewährleistung der vorstehend genannten Eigenschaften so anzuordnen, dass bei dessen Einbau in den Kopf eines Endoskops ein darin ausgebildeter Arbeitskanal zentral durch den Endoskopkopf geführt beleiben kann. Dies wird vorzugsweise dadurch erreicht, indem eine Mehrzahl an Optiken auf einer Kreisbahn um den zentralen Arbeitskanal im Endoskopkopf angeordnet sind und dabei weiter vorzugsweise in einem Winkel schräg nach außen bezüglich der Längsachse des Endoskops ausgerichtet sind. Alternativ hierzu ist es natürlich auch möglich nur eine Optik in entsprechender Ausrichtung dezentral anzuordnen und diese auf der Kreisbahn um den Arbeitskanal zu bewegen.

Eine bevorzugte Ausbildung der Erfindung sieht ferner die Anordnung einer Art Freiform-Linse vor.

Herkömmliche Linsen weisen einen symmetrischen Aufbau auf, der ein im wesentliches Kegelförmiges Sichtfeld ermöglicht. Werden, wie bei der vorliegenden Erfindung, eine Mehrzahl dieser kegelförmigen Sichtfelder miteinander verarbeitet, ergibt sich zwar ein Gesamtsichtfeld in dem vorstehend genannten Blickwinkel. Indessen wird die Senkrechte zur Bewegungsrichtung des Endoskops nicht rundum, sondern infolge der Kegelform nur abschnittsweise überschritten, sodass je nach Anzahl der verwendeten Optiken mehr oder mindergroße Totbereiche verbleiben, welche vom Gesamtblickfeld nicht überdeckt werden.

Die Freiformlinse gemäß der bevorzugten Ausbildung der Erfindung hat, wie ihre Bezeichnung bereits wiedergibt, keine symmetrische sondern eine individuelle Kontur oder Oberfläche, welche in Abhängigkeit von der Anzahl der verwendeten Optiken sowie deren Ausrichtung analytisch oder rechnerisch so bestimmt ist, dass auch die vorstehend genannten Totbereiche nunmehr eingesehen werden. Berechnungsverfahren für Freiform-Linsen sind generell im Stand der Technik bereits bekannt und beispielsweise in der Druckschrift "Optical Society of America A/Vol. 19, No. 3/March 2002 veröffentlicht, auf die an dieser Stelle ausdrücklich verwiesen wird.

Weitere vorteilhafte Ausgestaltungen der Erfindung sind Gegenstand der übrigen Unteransprüche.

Die Erfindung wird nachstehend anhand eines bevorzugten Ausführungsbeispiels unter Bezugnahme auf die begleitenden Zeichnungen näher erläutert.
Fig. 1 zeigt ein Ausführungsbeispiel einer visuellen Einrichtung eines Endoskops gemäß einem ersten bevorzugten Ausführungsbeispiel der Erfindung in einer prinzipiellen Perspektivenansicht,
Fig. 2 zeigt eine Seitenansicht eines vorderen Bereichs eines Endoskops, ausgerüstet mit der visuellen Einrichtung gemäß dem ersten bevorzugten Ausführungsbeispiel der Erfindung,

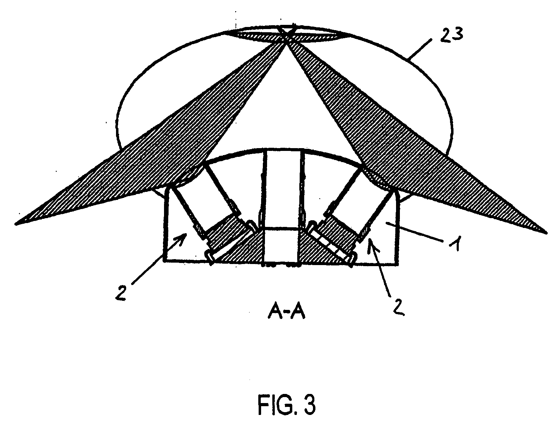

Fig. 3 ist eine Schnittdarstellung entlang der Linie A-A aus Figur 2,

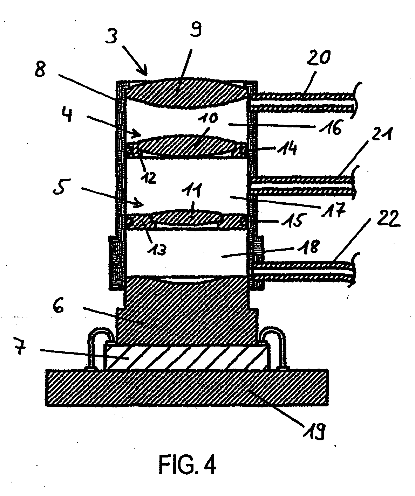

Fig. 4 zeigt eine Schnittdarstellung einer Optik samt einer darin eingebauten visuellen Einrichtung gemäß einem bevorzugten Ausführungsbeispiel der Erfindung,
Fig. 5 zeigt eine Seitenansicht eines vorderen Bereichs eines Endoskops, ausgerüstet mit der erfindungsgemäßen visuellen Einrichtung gemäß einem zweiten bevorzugten Ausführungsbeispiel der Erfindung und
Fig. 6a und 6b zeigen eine Schnittdarstellung sowie Vorderansicht einer Optik gemäß dem zweiten bevorzugten Ausführungsbeispiel der Erfindung.

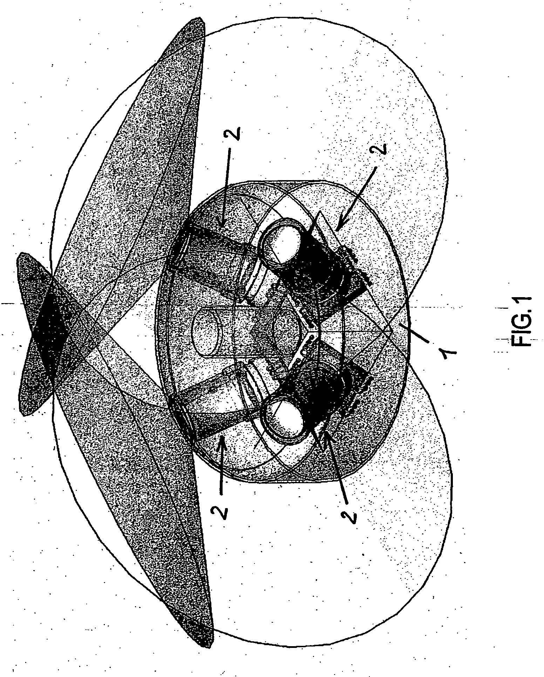

Vorab sei darauf hingewiesen, dass im vorliegenden Ausführungsbeispiel das Endoskop aus einem Endoskopschaft (nicht dargestellt) sowie einem daran angeordneten Endoskopkopf 1 aufgebaut ist, von welchen ein vorderer Bereich in der Fig. 1 dargestellt ist. Alternativ hierzu ist es aber auch möglich das Endoskop in Form einer Sonde oder Kapsel (ohne einen aus der Körperhöhle ragenden Schaft) auszubilden, in welchem die erfindungsgemäße visuelle Einrichtung vorzugsweise in einem vorderen Bereich der Kapsel untergebracht ist.

Wie aus der Fig. 1 gut zu erkennen ist, besteht die erfindungsgemäße visuelle Einrichtung vorliegend aus vier optischen Systemen 2 oder kurz Optiken, die jeweils aus einer Linseneinheit 3-6 sowie einem unter der Linseneinheit angeordneten lichtempfindlichen Element 7 oder Mikrochip bestehen. Alternativ hierzu könnten aber auch nur zwei oder drei Optiken 2 dieser Art angeordnet sein. Weiter alternativ könnte jedes der dargestellten optischen Systeme durch eine Mehrzahl kleinerer Optiken ersetzt sein, die miteinander gekoppelt sind und deren Blickfeld zumindest dem eines der dargestellten Optiken entspricht.

Vorzugsweise ist jedes der in Fig. 1 gezeigten optischen Systeme als ein Zoomobjektiv konstruiert. Ein solches Zoomobjektiv besteht aus einem im Wesentlichen rohrförmigen Linsenzylinder 8. Dieser ist entweder mit dem vorderen Ende des dargestellten Endoskopkopfs 1 einstückig verbunden oder lösbar in diesem montiert.

Der Linsenzylinder 8 nimmt in dem vorliegenden Ausführungsbeispiel drei Linseneinheiten 3-5 auf. Die erste Linseneinheit 3 besteht aus einer Linse 9, welche am äußersten Ende des Linsenzylinders 8 in diesem, senkrecht zur Mittellinie des Linsenzylinders 8 sowie fluiddicht fixiert ist.

Die zweite und dritte Linseneinheit 4, 5 sind jeweils im Wesentlichen kreisförmig und senkrecht zur Mittellinie des Linsenzylinders 8 angeordnet. Sie bestehen jeweils aus einer Linse 10, 11, einer Linsenfassung 12, 13 in welcher die entsprechende Linse 10, 11 fixiert ist sowie einem die jeweilige Linsenfassung 12, 13 umgebenden Dichtungsring 14, 15. Die Außendurchmesser der Linsenfassungen 12, 13 sind minimal kleiner als der Innendurchmesser des Linsenzylinders 8, so dass die Linsenfassungen 12, 13 in der Axialrichtung des Linsenzylinders 8 bewegbar sind. Die Dichtungsringe 14, 15 dichten zwischen den peripheren Außenflächen der entsprechenden Linsenfassungen 12, 13 und der Innenfläche des Linsenzylinders 8 so dass fluiddichte Fluidkammern 16-18 zwischen den Linseneinheiten 3-6 entstehen.

Die hintere Öffnung des Linsenzylinders wird durch eine weitere vierte sowie fest fixierte Linseneinheit 6 fluiddicht verschlossen. Des Weiteren weist die vierte Linseneinheit 6 auf ihrer Vorderseite eine mittige konkave Mulde auf, durch die das von den Linsen 9-11 gebündelte Licht gestreut und an den optischen Sensorchip 7 weitergegeben wird. Die hintere Hälfte der Linseneinheit 6 hat eine kubische Form, wobei dessen Seitenlängen in der Ebene senkrecht zur Längsachse des Linsenzylinders 8 der Größe des optischen Sensorchips 7 angepasst ist.

Dieser optische Sensorchip 7 ist mit seiner lichtempfindlichen Seite an der Hinterseite der Linseneinheit 6 angeordnet und wandelt visuelle Informationen in elektrische Signale um. Der optische Sensorchip 7 ist auf seiner dem Linsenzylinder 8 abgewandten Seite auf einem Funktionsträger 19 montiert, der wiederum innerhalb des vorderen Bereichs des Endoskops fixierbar ist.

Durch die fluiddichte Anordnung der vier Linseneinheiten 3-6 entstehen zwischen diesen die drei fluiddicht voneinander getrennten Fluidkammern 16-18.

An jede der Fluidkammern 16-18 ist eine nicht weiter dargestellte flexible Fluidleitung 20-22 angeschlossen, die von den Fluidkammern 16-18 durch den Endoskopschaft (nicht dargestellt) nach hinten zu einem Bedienungsende des Endoskopschafts führen. In jede Fluidkammer ist eine ebenfalls nicht weiter dargestellte Feder eingefügt, die in dem vorliegenden Ausführungsbeispiel als Spiralfeder ausgeführt und so angeordnet ist, dass deren Längsachse mit der Längsachse des Linsenzylinders 8 zusammenfällt. Zweckmäßigerweise ist der Außendurchmesser der Federn minimal kleiner als der Innendurchmesser des Linsenzylinders 8, so dass die Bewegungen der Federn nicht gebremst oder blockiert werden, wenn diese zusammengedrückt werden oder sich ausdehnen. Die Enden der jeweiligen Federn sind an den Linseneinheiten 6-6 abgestützt und bilden eine ringförmige Auflagefläche mit diesen aus. Diese Federn können in einer gewünschten Art und Weise vorgespannt sein, um die verstellbaren Linseneinheiten 4, 5 in einer Ausgangs- oder Konstruktionslage zu positionieren. Eine Montage des Objektivs wird dadurch vereinfacht, dass die Federn zwei benachbarte Linseneinheiten 3-6 voneinander beabstanden, so dass sich die empfindlichen Linsen 9-11 nicht berühren können, wenn noch kein Fluid in die Fluidkammern 16-18 gefüllt ist. Des Weiteren sorgen die Federn durch ihr gleichmäßiges Andrücken in der Ebene senkrecht zur Längsachse des Linsenzylinders 8 gegen die Linseneinheiten 3-6 für eine gleichmäßige Axialbewegung und vermeiden somit beim Bewegen ein Schrägstellen oder Verkanten der Linseneinheiten 3-6 in dem Linsenzylinder 8.

An dem Bedienungsende jeder Fluidleitung 20-22 ist jeweils ein nicht dargestellter Zylinder angeschlossen, in dem ein Kolben gleitfähig eingefügt ist und dabei einen Aktuatorraum abgegrenzt, der über die entsprechende Fluidleitung mit der Fluidkammer in Verbindung steht.

Die Fluidkammern 16-18, die Fluidleitungen 20-22 sowie die Aktuatorräume sind jeweils mit einem inkompressiblen Fluid gefüllt, dem aufgrund des Vorhandenseins zwischen den Linseneinheiten, die Eigenschaft innewohnt, die Lichtübertragung zwischen den Linseneinheiten möglichst wenig zu beeinflussen.

Bezüglich der Zylinder-Kolben-Einheit ist es vorteilhaft, wenn der Außendurchmesser des Kolbens deutlich kleiner als der Innendurchmesser des Zylinders ist. Auf diese Weise wird eine Untersetzung für die Bewegung der Kolben realisiert, indem für eine bestimmte vorgegebene Druckänderung im jeweiligen Aktuatorraum eine entsprechend größere Kolbenbewegung erforderlich ist, verglichen mit der Kolbenbewegung, wenn der Innendurchmesser der Zylinder gleich dem Außendurchmesser der Kolben wäre. Die Kolben werden jeweils von einem Aktuator bewegt, für welche beispielsweise elektrische Schrittmotoren oder Magnetspulen zum Einsatz kommen können.

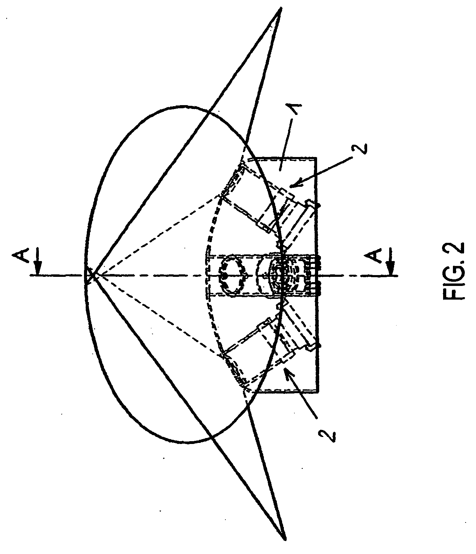

Wie in der Fig. 1 dargestellt ist, sind die dort gezeigten vier Optiken 2 in gleichem Winkelabstand zueinander in Umfangsrichtung des Endoskops verteilt und dabei schräg nach außen gerichtet. Gemäß der Fig. 2 beträgt der Schrägwinkel im vorliegenden Ausführungsbeispiel 45° bezüglich einer Längsachse des Endoskops während der Öffnungswinkel jeder Optik auf 140° festgelegt ist. Hierdurch ergibt sich ein Blickfeld für jede der Optiken 2, welches jeweils über die Senkrechte zur Bewegungsrichtung nach hinten sowie über die Längsachse nach vorn hinaus reicht. Wie insbesondere aus der Fig. 2 zu erkennen ist, überlappen sich die Blickfelder im vorderen Bereich des Endoskops, sodass sich über ein bestimmtes Kugelsegment 23 um das Endoskop herum ein geschlossenes visuelles Abtastfeld ausbildet, welches sich teilkreisförmig nach hinten über die Senkrechte zur Bewegungsrichtung des Endoskops im Bereich der vier Optiken verlängert.

Vorzugsweise ist der Funktionsträger 19, an welchem die Optiken 2 montiert sind, in Form eines vierkantigen Pyramidenstumpfs ausgebildet, in dessen Mitte weiter vorzugsweise ein Arbeitskanal vorgesehen ist.

Jede Optik 2 ist an eine Bildverarbeitungsstation angeschlossen. Je nach dem ob es sich bei dem Endoskop um eine konventionelle Konstruktion mit Endoskopschaft handelt oder um eine vom Ein-/Ausgang der zu untersuchenden Körperhöhle getrennte Sonden- oder Kapselausführung wird der vorstehend genannte Anschluss mittels elektrisch oder Licht leitenden Kabeln oder per Funk hergestellt. Die Bildverarbeitungsstation umfasst einen Computer mit einem Ausgabegerät wie beispielsweise einem Monitor und/oder einer Bilderzeugungseinrichtung. Die Bildverarbeitung erfolgt über herkömmliche, im Stand der Technik bereits seit einiger Zeit zur Verfügung stehende Bildverarbeitungsprogramme, mittels deren Hilfe aus den simultanen Einzelaufnahmen der verwendeten Optiken ein Gesamtbild erzeugt werden kann.

Die Funktionsweise der vorstehend beschriebenen visuellen Einrichtung lässt sich wie folgt zusammenfassen:

Bei Einführen des Endoskops in einen Körperkanal muss ein behandelnder Arzt eine permanente visuelle Orientierungsmöglichkeit haben, um die Einführbewegung zu überwachen und das Endoskop entsprechend so zu betätigen, dass dieses möglichst sanft um die natürlichen Kanalbiegungen geführt wird. Hierfür weisen solche Endoskope, die mit einem Schaft ausgebildet sind, an ihrem distalen Ende ein sogenanntes Deflecting auf (hierbei handelt es sich um einen abkrümmbaren Finger, an dessen freiem Ende der Endoskopkopf 1 angeordnet ist), welches manuell über den Endoskopschaft abgekrümmt wird, um den einzelnen Kanalbiegungen angepasst zu werden. Es ist also erforderlich, dass der Blick nach vorn, d.h. in Bewegungsrichtung ständig gegeben ist.

Gleichzeitig jedoch sind die Kanalwände auf Abnormalitäten zu inspizieren, ohne dass hierfür eine Abkrümmbewegung des Deflecting erforderlich wird. Durch die erfindungsgemäße visuelle Einrichtung ist dies möglich, indem die Bildsignale der einzelnen Optiken 2 von der digitalen Bildverarbeitungsstation so zusammengesetzt werden, dass ein Panoramabild entsteht, auf welchem zusätzlich zu der Sicht nach Vorn eine Rundumsicht um 360° bezüglich der Bewegungsrichtung sowie die Sicht schräg nach hinten dargestellt ist. Ein Übersehen von Abnormalitäten wird so nahezu ausgeschlossen.

In dem vorstehend beschriebenen bevorzugten Ausführungsbeispiel sind insgesamt vier Optiken gezeigt, die in einem jeweils vorbestimmten Winkelabstand zueinander angeordnet sind. Alternativ hierzu können natürlich auch mehr oder weniger Optiken vorgesehen sein. Bei Verwendung von nur einer oder ggf. zwei Optiken, kann/können diese rotatorisch bewegbar gelagert sein. In diesem Fall könnte beispielsweise der vorstehend beschriebene Kegelstumpf des bevorzugten Ausführungsbeispiels drehbar gelagert sein, so dass die eine oder zwei Optiken, die auf der Mantelfläche des Kegelstumpfs angeordnet sind, auf einer Kreisbahn mit vorbestimmter Geschwindigkeit laufen und so einen 360° Rundblick aufnehmen.

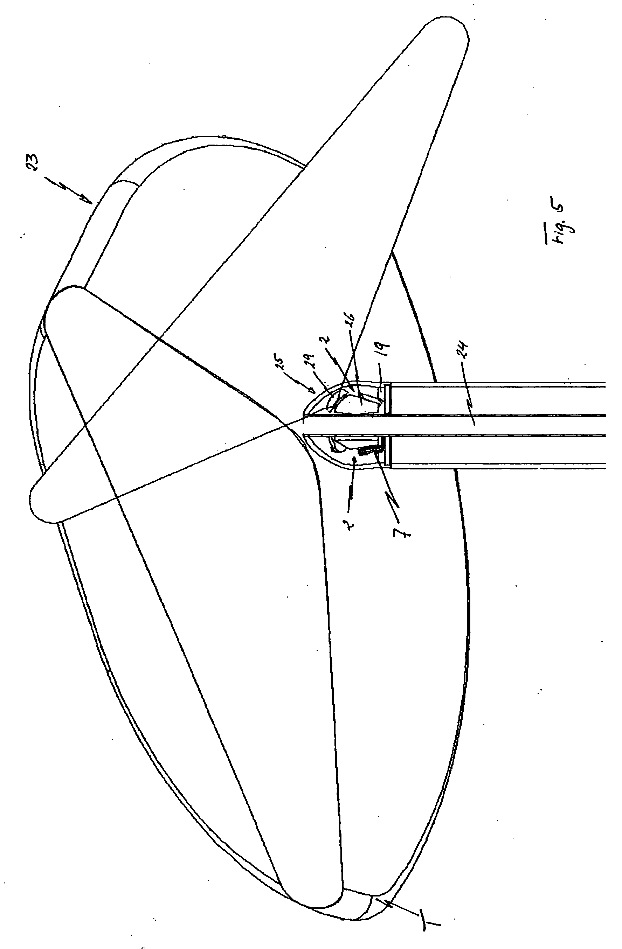

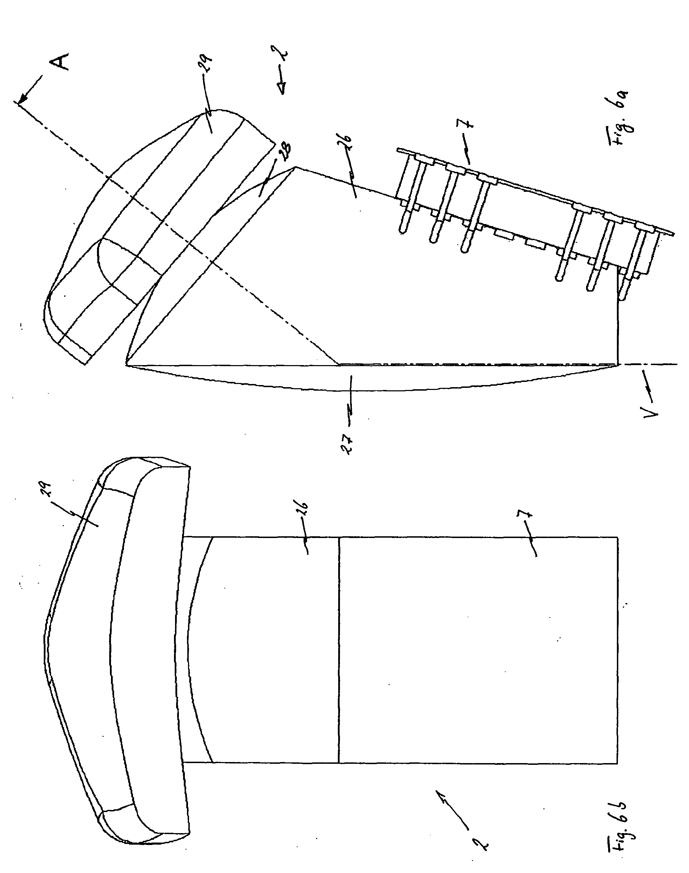

In den Fig. 5 und 6a - 6b ist nunmehr ein zweites bevorzugtes Ausführungsbeispiel der Erfindung dargestellt.

Gemäß der Fig. 5 hat ein Endoskopkopf des zweiten bevorzugten Ausführungsbeispiels einen Arbeitskanal 24, der sich an einem vorderen Abschnitt des Endoskopkopfs 25 öffnet. Um den Arbeitskanal 24 herum sind mindestens zwei, vorzugsweise jedoch drei Optiken 2 jeweils bestehend aus einem Licht empfindlichen Element 7 wie beispielsweise ein Mikrochip oder ein Lichtleiterkabel sowie einem Linsensystem angeordnet, und auf einer Trägerplatte 19 montiert. Eine dieser Optiken 2 ist in den Fig. 6a und 6b detaillierter dargestellt.

Demzufolge hat jede Optik 2 einen lichtempfindlichen Mikrochip 7, der in im wesentlichen vertikaler oder im spitzen Winkel zur Vertikalen V geneigten Ausrichtung an einem Prisma 26 fixiert ist, dessen eine, dem Chip 7 gegenüberliegende Seite eine Lichtreflektionsfläche 27 bildet. Im einfachsten Fall ist diese Seite nach innen verspiegelt.

Das Prisma 26 weist ferner eine Lichteinfallsseite auf, welche ggf. durch eine optisch aktive Fläche 28 gebildet wird, die in einem ebenfalls zur Vertikalen V unter einem bestimmten (vorzugsweise spitzen) Winkel nach außen geneigt ist, derart, dass der Lichteinfall schräg von oben auf die optisch aktive Fläche 28 verläuft.

Der Lichteinfallsseite 28 des Prismas 26 ist die Freiformlinse 29 vorgeordnet. Generell sind aus dem Stand der Technik Freiformlinsen bekannt, wie sie beispielsweise bei Kraftfahrzeugscheinwerfern zur Streuung von ausfallendem Licht verwendet werden.

Im vorliegenden Fall indessen ist die Freiformlinse 29 erfindungsgemäß derart gestaltet, dass der hierdurch erzielbare Sichtkegel nicht symmetrisch, d.h. im Querschnitt kreisförmig ist, sondern eine zur Kreisform unterschiedliche Querschnittsfläche abdeckt. Diese

Querschnittsform ist abhängig von der Anzahl der Optiken 2 und damit deren Winkelabstand zueinander, sowie von der Neigung bzw. dem Lichteinfallswinkel bezüglich der Vertikalen V, der durch die Form des Prismas 26 definiert ist.

In Abhängigkeit dieser beiden Größen wird die Freiformlinse 29 analytisch oder anhand im Stand der Technik bekannter Rechenmodelle so geformt, dass das durch die Optik 2 erzielbare Blickfeld über einen möglichst großen Umfangswinkel bezüglich des Endoskopkopfs 25 hinweg die Senkrechte zur Endoskoplängsachse nach hinten überschreitet. In anderen Worten ausgedrückt, ist die Freiformlinse 26 im günstigsten Fall so geformt, dass das die Senkrechte zur Endoskopachse nach hinten überschreitende Sichtfeld nicht kreissegmentförmig wie bei einem einfachen (kreisförmigen) Sichtkegel gemäß der Fig. 1 der Fall, sondern ellipsenförmig ist. In diesem Fall reduzieren sich die in der Fig. 1 noch deutlich erkennbaren, im wesentlichen dreieckigen Totbereiche der sich überlappenden Sichtfelder der einzelnen Optiken, wenn überhaupt, zu kleinen Tupfen T, die bei medizinischen Untersuchen praktisch unbedeutend sind.

Die Erfindung betrifft eine visuelle Einrichtung eines Endoskops mit zumindest einer Optik (2) oder einem Optikverbund, welche(r) ein einem vorderen Bereich des Endoskops angeordnet ist. Die zumindest eine Optik oder der zumindest eine Optikverbund realisiert dabei einen Öffnungswinkel von größer als 180° und ist so angeordnet ist, dass dessen Blickfeld sowohl über die Senkrechte zur Bewegungsrichtung als auch über die nach vorn weisende Längsachse des Endoskops hinaus reicht.

## Patentansprüche

1. Visuelle Einrichtung eines Endoskops mit zumindest einer Optik (2) oder einem Optikverbund, welche(r) an einem vorderen Bereich des Endoskops angeordnet ist, **dadurch gekennzeichnet, dass** die Optik oder der Optikverbund einen Öffnungswinkel von größer als 180° realisiert und so angeordnet ist, dass dessen Blickfeld über die Senkrechte zur Bewegungsrichtung hinaus reicht.

2. Visuelle Einrichtung nach Anspruch 1 **dadurch gekennzeichnet, dass** das Blickfeld der zumindest einen Optik oder des zumindest einen Optikverbunds über die nach vorn weisende Längsachse des Endoskops hinausreicht.

3. Visuelle Einrichtung nach Anspruch 1 oder 2 **dadurch gekennzeichnet, dass** zumindest drei Optiken oder Optikverbünde vorgesehen sind, die vorzugsweise in gleichem Winkelabstand in Umfangsrichtung des Endoskops gesehen angeordnet sind, derart, dass sich deren Blickfelder zumindest teilweise überlappen.

4. Visuelle Einrichtung nach einem der Ansprüche 1 bis 3, **dadurch gekennzeichnet, dass** jede Optik oder jeder Optikverbund einen Öffnungswinkel von zwischen 120° und 145°, vorzugsweise 140° realisiert.

5. Visuelle Einrichtung nach einem der vorstehenden Ansprüche, **dadurch gekennzeichnet, dass** die Optiken oder Optikverbünde in einem Winkel von zwischen 40° und 50°, vorzugsweise 45° zur Vorwärts-Bewegungsrichtung des Endoskops ausgerichtet sind.

6. Visuelle Einrichtung nach einem der vorstehenden Ansprüche, **dadurch gekennzeichnet, dass** jede Optik oder jeder Optikverbund ein Einzelbild aufnimmt, welches über eine Bildübertragungseinrichtung an eine Bildverarbeitungsstation zur digitalen Erstellung eines Gesamtbildes übertragbar ist.

7. Visuelle Einrichtung nach einem der vorstehenden Ansprüche, **dadurch gekennzeichnet, dass** jede Optik oder jeder Optikverbund zumindest eine Freiformlinse aufweist.

8. Visuelle Einrichtung nach Anspruch 7, **dadurch gekennzeichnet, dass** die Freiformlinse so gestaltet ist, dass das über die Senkrechte zur Bewegungsrichtung nach hinten hinaus reichende Blickfeld jeder Optik oder jedes Optikverbunds in Umfangsrichtung des Endoskops ausweitet, sodass Totbereiche zwischen zwei sich überlappenden Blickfeldern zweier Optiken oder Optikverbunde jenseits dieser Senkrechten minimiert werden.

9. Visuelle Einrichtung nach einem der vorstehenden Ansprüche, **dadurch gekennzeichnet, dass** die zumindest eine Optik oder der Optikverbund dezentral im vorderen Bereich des Endoskops angeordnet ist, derart das ein Arbeitskanal des Endoskops zentral dessen vorderen Bereich durchläuft.
